# EUROPÄISCHE PATENTANMELDUNG

(11) **EP 4 737 390 A1**
(43) Veröffentlichungstag der Anmeldung: **06.05.2026**
(21) Anmeldenummer: 24209843.2
(22) Anmeldetag: 30.10.2024
(51) Int. Cl.: C01B 3/34, B01J 19/08

(54) **VERFAHREN UND VORRICHTUNG ZUR HERSTELLUNG VON STÖCHIOMETRISCHEM SYNTHESEGAS MIT REDUZIERTEM CO2-FUSSABDRUCK**

(71) Anmelder: Evonik Oxeno GmbH & Co. KG, 45772 Marl (DE)
(72) Erfinder: Lang, Jürgen Erwin, 76229 Karlsruhe (DE); Franke, Robert, 45772 Marl (DE)
(74) Vertreter: Evonik Patent Association

(57) **Zusammenfassung**

Die vorliegende Erfindung betrifft ein Verfahren zur Herstellung einer Produktgaszusammensetzung, umfassend Kohlenstoffmonoxid und Wasserstoff, indem eine Eduktgaszusammensetzung, die Wasserstoff, mindestens eine kohlenwasserstoffhaltige Verbindung und mindestens ein Oxidationsmittel umfasst, in einem Strömungsreaktor in einem Plasma bei einer Temperatur von größer oder gleich 1000 °C umgesetzt wird. Die Erfindung betrifft außerdem eine Vorrichtung zur Durchführung des Verfahrens.

## Beschreibung

Gegenstand der vorliegenden Erfindung ist ein Verfahren zur Herstellung einer Produktgaszusammensetzung, umfassend Kohlenstoffmonoxid und Wasserstoff, indem eine Eduktgaszusammensetzung, die Wasserstoff, mindestens eine kohlenwasserstoffhaltige Verbindung und mindestens ein Oxidationsmittel umfasst, in einem Strömungsreaktor in einem Plasma bei einer Temperatur von größer oder gleich 1000 °C umgesetzt wird. Gleichfalls ist eine Vorrichtung zur Durchführung des Verfahrens ein Gegenstand der vorliegenden Erfindung.

Die CO₂-Emissionen betrugen in Deutschland im letzten Jahrzehnt über 1 Billion Tonnen an CO₂-Äquivalent, wobei die Chemieindustrie mit ca. 5 % zu diesem Wert beiträgt. Folglich ist die Chemieindustrie bestrebt aufgrund von ökologischen und ökonomischen Gesichtspunkten die CO₂-Emissionen zu senken, beispielsweise durch die Veränderung der Rohstoffbasis, Einsatz von CO₂-armen Erzeugungstechnologien sowie durch eine Optimierung des Energiebedarfs. Eine besonders große Wirkung kann eine Umstellung der Herstellung von großvolumigen Basischemikalien entfalten. Geeignete Basischemikalien sind beispielsweise Wasserstoff und Synthesegas. Der weltweite Bedarf für Wasserstoff wird auf rund 50 Mio. t pro Jahr und für Synthesegas auf rund 220 Mio. t pro Jahr geschätzt.

Die Dampfreformierung aus leichten Kohlenwasserstoffen (kurzkettige Kohlenwasserstoffe, in der Regel C1 bis C5-Kohlenwasserstoffe) ist das derzeit üblichste Verfahren zur Erzeugung von Synthesegas mit einem molaren Wasserstoff zu Kohlenstoffmonoxid-Verhältnis von 2,5 bis 3,0. Die Einsatzstoffe, beispielsweise Erdgas, Flüssiggas oder Naphtha, werden mit Wasserdampf in katalytischen Rohrreaktoren endotherm zu Synthesegas mit hohem Wasserstoffgehalt umgesetzt. Prozesswärme und Rauchgaswärme werden zur Dampferzeugung genutzt.

Problematisch gestaltet sich die Herstellung von Synthesegas mittels Dampfreformierung, wenn das Synthesegas ein molares Verhältnis von Wasserstoff zu Kohlenstoffmonoxid zwischen etwa 1,0 und 2,0 aufweisen soll. Dieses Verhältnis von Wasserstoff zu Kohlenstoffmonoxid ist jedoch von besonderer Bedeutung im Bereich der Herstellung von Treibstoffen und Chemikalien, beispielsweise werden bedeutende Mengen an Synthesegas für die Oxo-Synthese zur Herstellung von Alkoholen und Aldehyden aus Olefinen (Wasserstoff zu Kohlenstoffmonoxid-Verhältnis von 1:1) oder Fischer-Tropsch-Synthese zu Olefinen (Wasserstoff zu Kohlenstoffmonoxid-Verhältnis von 1:1) benötigt. Der Grund dafür ist, dass bei der Dampfreformierung Katalysatoren benötigt werden, die eine besondere Stabilität gegen Verkokung aufweisen.

Ein weiterer Nachteil der katalytischen Dampfreformierung ist die Anfälligkeit gegenüber Katalysatorgiften, wie beispielsweise Schwefel, das aus Schwefel-enthaltende Verbindungen eingetragen kann. Um den Katalysator zu schützen, muss daher das Einsatzgas in vorgelagerten Prozessstufen aufwendig gereinigt werden. Organische Schwefelverbindungen, beispielsweise Mercaptane oder Thiophene werden dazu beispielsweise zuvor an Co-Mo oder Ni-Mo-Katalysatoren zu Schwefelwasserstoff hydriert. Schwefelwasserstoff wird beispielsweise an ZnO umgesetzt, das sich dabei in ZnS umwandelt und regelmäßig ersetzt werden muss. Ferner ist die Wärmeintegration der Dampfreforming unvollständig, weil lediglich ca. 50% der erzeugten Wärme effektiv für die Reaktion genutzt wird. Darüber hinaus weist das so hergestellte Synthesegas einen recht hohen CO₂- Fußabdruck von ca. 60 kg CO₂ pro 100 kg Synthesegas auf.

Alternative Verfahren zur Herstellung von Synthesegas mit einem molaren Verhältnis von Wasserstoff zu Kohlenstoffmonoxid von etwa 1,0 bis 2,0 sind die autotherme Reformierung von Erdgas sowie die Partialoxidation. Beide Verfahren werden technisch angewendet, erfordern aber den Einsatz von Reinsauerstoff, der durch Luftzerlegung gewonnen wird. Die energetisch sehr anspruchsvolle kryogene Luftzerlegung ist für die beiden letzteren Verfahren ein maßgeblicher Kostentreiber.

Die Reformierung von Erdgas mit CO2 zu Synthesegas ist zudem eine endotherme Reaktion. Die Ausbeuten bei dieser Reaktion von Methan mit CO2 hängen von verschiedenen Faktoren ab, wie z.B. den Reaktionsbedingungen, der Verweilzeit im Reaktor und der Reaktionszeit. Die Ausbeuten bei dieser Reaktion sind in der Regel niedrig, da die endotherme Reaktion viel Energie benötigt. Die Reaktion ist kinetisch ungünstig, da sie langsam verläuft und eine hohe Aktivierungsenergie erfordert. Zwar lässt sich die Reaktion von Methan mit CO2 durch den Einsatz von Katalysatoren verbessern. Die Katalysatoren gehen wegen den hohen erforderlichen Prozesstemperaturen kaputt. Darüber hinaus stellt eine Verkokung der Katalysatoren ein großes Problem dar.

Die Aufgabe der vorliegenden Erfindung war es daher, ein Verfahren und eine Vorrichtung bereitzustellen, womit Synthesegas mit reduziertem CO₂-Fußabdruck erzeugt werden kann. Eine weitere Aufgabe bestand weiterhin darin, dass das Verfahren und die Vorrichtung unter wirtschaftlich attraktiven Rahmenbedingungen für die chemische Industrie bereitgestellt werden können. Zudem bestand die Aufgabe darin ein möglichst katalysatorfreies Verfahren aufzufinden, das die Durchführung der Synthesegasherstellung bei hohen Temperaturen erlaubt. Gleichfalls sollte auf Lösemittel oder andere Feststoffe, die aufbereitet werden müssten, verzichtet werden.

Gleichfalls bestand die Aufgabe darin, dass mit dem Verfahren einerseits ein definiertes, insbesondere festes Verhältnis von Wasserstoff zu Kohlenstoffmonoxid im Synthesegas erzeugt und andererseits das Verhältnis von Wasserstoff zu Kohlenstoffmonoxid je nach Bedarf definiert eingestellt werden kann. Das Verfahren sollte also möglichst flexibel sein.

Ferner bestand die Aufgabe darin, eine Vorrichtung zur Durchführung dieses Verfahrens zur Herstellung des gewünschten Synthesegases zu entwickeln. Dabei sollte die Vorrichtung robust gegenüber Schwefel-enthaltenden und anderen Verunreinigungen sein und einen höheren Wirkungsgrad aufweisen als bekannte Verfahren. Vorzugsweise soll das Verfahren erlauben, ggf. vorhandene Schwefelverbindungen nach Durchführung des Verfahrens mittels geeigneter Verfahren, wie beispielsweise thermischer Verfahren, wie destillative Abtrennung und/oder Absorption/Desorption und/oder mittels Membranverfahren abzutrennen.

Die Aufgaben konnten durch das in Anspruch 1 beschriebene Verfahren und die in Anspruch 12 beschriebene Vorrichtung gelöst werden. Bevorzugte Ausführungsformen sind in den Unteransprüchen angegeben und detailliert in der Beschreibung aufgeführt.

Gegenstand der vorliegenden Erfindung ist ein Verfahren zur Herstellung einer Produktgaszusammensetzung, die zumindest Kohlenstoffmonoxid und Wasserstoff umfasst, durch Umsetzen einer Eduktgaszusammensetzung in einem Plasma bei einer Temperatur der Eduktgaszusammensetzung von größer oder gleich 1000 °C, wobei die Eduktgaszusammensetzung Wasserstoff oder eine Wasserstoffhaltige Gasmischung;
mindestens eine kohlenwasserstoffhaltige Verbindung, ausgewählt aus der Gruppe, bestehend aus Methan, Ethan, Ethen, Propan, Butan, 2-Methylpropan, Pentan, n-Pentan, Isopentan und/oder Neopentan, Methanol, Ethanol und Mischungen von zwei oder mehr davon, und
mindestens ein Oxidationsmittel, ausgewählt aus der Gruppe, bestehend aus Kohlenstoffdioxid und einer Mischung umfassend Kohlenstoffdioxid und Wasser, umfasst. Das Wasser kann auch in Form von Wasserdampf eingesetzt werden und wird insbesondere zur Regelung des Wasserstoffgehaltes der Produktgaszusammensetzung zugesetzt.

Überraschend konnten die Aufgaben gelöst werden, indem Wasserstoff, eine kohlenwasserstoffhaltige Verbindung und mindestens ein Oxidationsmittel, das optional Wasser enthält, gemeinsam in einem Plasmaverfahren zu Kohlenstoffmonoxid und Wasserstoff, also Synthesegas, umgesetzt werden. Das erfindungsgemäße Verfahren zeigt keine Anfälligkeit gegenüber Schwefelverbindungen oder anderen Verunreinigungen und erlaubt insbesondere eine nahezu vollständige Wärmeintegration. Das erfindungsgemäße Verfahren zeigt zudem einen höheren Wirkungsgrad als die Einzelreaktionen einer oxidativen Umsetzung von Kohlenwasserstoffen zu Kohlenstoffmonoxid und Wasserstoff. Weiterhin wird CO₂ in dem Verfahren eingesetzt und über das Synthesegas in Folgeprozessen zu Wertprodukten umgesetzt, so dass sich der CO₂-Fußabdruck reduziert.

Der bei der Plasmaumsetzung in der Eduktgaszusammensetzung eingesetzte Wasserstoff oder die Wasserstoffhaltige Gasmischung wird insbesondere als ionisierbares Trägergas zugesetzt. In der Wasserstoffhaltigen Gasmischung kann neben Wasserstoff Stickstoff und/oder Argon oder Mischungen vorhanden sein.

Als geeignete kohlenwasserstoffhaltige Verbindung gelten grundsätzliche alle Kohlenwasserstoffe, die bei Temperaturen oberhalb 1000 °C gasförmige Kohlenwasserstoffe bilden. Die kohlenwasserstoffhaltige Verbindung wird gemäß der vorliegenden Erfindung aus der Gruppe, bestehend aus Methan, Ethan, Ethen, Propan, Butan, 2-Methylpropan, Pentan, n-Pentan, Isopentan und/oder Neopentan, Methanol, Ethanol und Mischungen von zwei oder mehr davon, ausgewählt. In einer bevorzugten Ausführungsform der vorliegenden Erfindung ist die kohlenwasserstoffhaltige Verbindung Methan, Ethan, Methanol, Ethanol oder eine Mischung von zwei oder mehr der genannten Verbindungen. Besonders bevorzugt ist die kohlenwasserstoffhaltige Verbindung Methan, Methanol oder eine Mischung von Methan und Methanol. Die einzelnen Stoffe, die als kohlenwasserstoffhaltige Verbindung eingesetzt werden können, können grundsätzlich als Reinstoffe oder als Gasmischung eingesetzt werden. Als kommerziell erhältliche Gasmischung, die eine kohlenwasserstoffhaltige Verbindung enthält, kann Erdgas eingesetzt werden. Erdgas enthält hauptsächlich Methan.

Die kohlenwasserstoffhaltige Verbindung kann wie erwähnt auch eine Mischung mehrerer Kohlenwasserstoffe sein. In einer solchen Mischung liegt Methan vorzugsweise in einem Gehalt von größer oder gleich 50 bis 95 Vol.-%, in einer Gesamtzusammensetzung an Kohlenwasserstoffen von 100 Vol.-% vor.

Das im erfindungsgemäßen Verfahren eingesetzte Oxidationsmittel wird aus der Gruppe, bestehend aus und einer Mischung umfassend Kohlenstoffdioxid und Wasser, ausgewählt.

Die einzelnen Komponenten der Eduktgaszusammensetzung können grundsätzlich einzeln und unabhängig voneinander zugeführt und vor der Umsetzung zu Synthesegas vermischt werden. Grundsätzlich ist es auch möglich und vorteilhaft, wenn einzelne Komponenten bereits zumindest teilweise in einer Mischung eingesetzt werden. Ein Beispiel für einen solchen Rohstoff ist Biogas, also eine Gasmischung, die Methan, Kohlendioxid und ggf. auch eine gewisse Menge an Ammoniak, Schwefelwasserstoff, Wasserstoff und oder Wasser bzw. Wasserdampf enthält.

Biogas mit den Hauptkomponenten Methan und Kohlenstoffdioxid können auch aus der anaeroben Verwertung von Biopolymeren, wie polymeren Substraten umfassend Polysaccharide, Proteine und Lipide stammen. Als Ausgangsmaterial zur anaeroben Verwertung von Biopolymeren kommen u. a. Maissilage, Grassilage, Roggen Ganzpflanzensilage (GPS), Zuckerrübenpressschnitzel, Schweinemist, Kuhmist, Futterrüben, Bioabfälle, Getreideschlempe, Schweinegülle, Rindergülle in Frage.

Die beim erfindungsgemäßen Verfahren eingesetzte Eduktgaszusammensetzung enthält vorzugsweise 60 bis 80 Vol.-%, vorzugsweise 65 bis 75 Vol.-% Wasserstoff; 10 bis 20 Vol.-%, vorzugsweise 12 bis 20 Vol.-% mindestens eine kohlenwasserstoffhaltige Verbindung; und 10 bis 20 Vol.-%, vorzugsweise 12 bis 20 Gew.-% mindestens ein Oxidationsmittel. Die Gesamtzusammensetzung der Eduktgaszusammensetzung beträgt dabei stets 100 Vol.-%. Der Gehalt an Schwefel-enthaltenden Verbindungen in der Eduktgaszusammensetzung ist vorzugsweise unterhalb 2 Vol.-%, vorzugsweise kleiner gleich 0,2 Vol.-%, besonders bevorzugt kleiner 0,02 Vol.-%.

Die Umsetzung der Eduktgaszusammensetzung erfolgt in einem Hochtemperaturplasma. Die Temperatur des Prozessgases (= Eduktgaszusammensetzung) bei der Umsetzung beträgt erfindungsgemäß größer oder gleich 1000 °C. In einer bevorzugten Ausführungsform wird die Umsetzung bei einer Temperatur von größer oder gleich 1300 °C, weiterhin bevorzugt größer oder gleich 1500 °C und besonders bevorzugt größer oder gleich 1800 °C, vorzugsweise abhängig von der Verweilzeit im Reaktorrohr durchgeführt. Zur Temperaturmessung bei diesen hohen Temperaturen eignen sich optische Verfahren, bspw. mittels eines Glühdrahtes als Referenz, oder Sensoren wie Pyrometer Messsensoren bis 1800 °C bspw. von ABB^{®} oder Endress+Hauser^{®}. Als Thermoelemente können u. a. jene vom Typ S (Innenader/Thermopaar: Platin-Rhodium 10%/Platin) für Temperaturen bis 1600 °C, Typ R (Innenader/Thermopaar: Platin-Rhodium 13%/Platin) für Temperaturen bis 1600 °C, Typ B (Innenader/Thermopaar: Platin-Rhodium 30%/Platin-Rhodium 6%) für Temperaturen bis 1700 °C, Typ C (Innenader/Thermopaar: Wolfram-5% Rhenium/Wolfram-20%Rhenium) für Temperaturen bis 2315 °C und/oder Typ A (Innenader/Thermopaar: Wolfram-5%Rhenium / Wolfram-20%Rhenium) für Temperaturen bis 2500 °C eingesetzt werden. Vorzugsweise und abhängig von der Prozessgaszusammensetzung wird das Thermoelement in einem dem Fachmann bekannten keramischen Schutzrohr z.B. bestehend aus Korundkeramik (Al₂O₃ für Temperaturen bis 1800°C) oder Zirkonium-Mischoxid (bis 2200°C) eingelassen.

Das Plasma wird vorzugsweise mit einer elektrischen Leistung im Bereich von 500 kW bis 10.000 kW, besonders bevorzugt im Bereich von 6500 bis 8000 kW betrieben. Die anliegende Spannung, die sowohl Gleich- als auch Wechselspannung sein kann, liegt vorzugsweise im Bereich von 5000 Volt bis 7000 Volt bzw. 7000 Volt bis 8500 Volt. Die Stromstärke liegt vorzugsweise im Bereich von 500 bis 800 bzw. 800 bis 950 Ampere.

Das erfindungsgemäße Verfahren wird weiterhin bevorzugt bei einem Druck von 10 mbar_{abs} bis 10 bar_{abs}, bevorzugt bei einem Druck von 500 mbar_{abs} bis 5 bar, besonders bevorzugt bei einem Druck von 1 bis 3 bar_{abs} betrieben. Die Einheit bar_{abs} meint bar absolut, also den Absolutdruck. Beim Absolutdruck ist der Druck auf den leeren Raum (= Druck von 0 bar) bezogen. Absolutdrucksensoren, die dem Fachmann bekannt sind, messen den Absolutdruck im Vergleich zu einem im Sensorelement eingeschlossenen Vakuum (nahe ca. 0 bar).

Die Umsetzung erfolgt als Gasphasenprozess, in dem der Energieeintrag mittels elektrischer Entladung durch Elektronen erfolgt (Plasma). Somit kann auf die Verwendung von Katalysatoren verzichtet werden und auch eine Vorreinigung der Eduktgaszusammensetzung oder einzelner Komponenten der Eduktgaszusammensetzung kann unterbleiben. Des Weiteren wurde herausgefunden, dass im Plasmabetrieb auf der Rohrelektrode (Kathode) des Reaktors Kohlenstoffablagerung auf der inneren Rohroberfläche auftreten. Überraschend wurde gefunden, dass sich dadurch sich die Lebensdauer der Elektrode erheblich verlängern. Daher ist eine bei der Reformierungs-Reaktion im Plasma möglicherweise auftretende Koksbildung erwünscht, da diese zu einer längeren Lebensdauer der Elektroden führt und die Wirtschaftlichkeit des Verfahrens verbessert.

Mit dem erfindungsgemäßen Verfahren wird eine Produktgaszusammensetzung erzeugt, die Wasserstoff und Kohlenstoffmonoxid enthält. Die Produktgaszusammensetzung umfasst dementsprechend bevorzugt einen Gehalt an Wasserstoff von 45 bis 90 Vol.-%, besonders bevorzugt von 70 bis 80 Vol.-% und einen Gehalt an Kohlenstoffmonoxid von vorzugsweise 10 bis 55 Vol.-%, besonders bevorzugt von 20 bis 30 Vol.-%. Die Gesamtzusammensetzung der Produktzusammensetzung dabei stets 100 Vol.-%.

Die Produktgaszusammensetzung umfasst Kohlenstoffmonoxid und Wasserstoff weiterhin bevorzugt im Molverhältnis (CO : H₂) von 1 : 5 bis 0,5 : 1, weiterhin bevorzugt von 1 : 2 bis 1 : 4 und besonders bevorzugt von 0,75 bis 1,25 : 1.

Mit dem vorliegenden Verfahren ist es also möglich ein Synthesegas im gewünschten stöchiometrischen molaren Verhältnis von CO zu H₂ von etwa 1, insbesondere mit +/- 10 Prozent, reproduzierbar und wirtschaftlich herzustellen. Durch Zugabe von Wasser, insbesondere Wasserdampf, oder Ammoniak oder eine Mischung aus Ammoniak und Wasser, insbesondere Wasserdampf, kann der H₂-Anteil im Synthesegas, hier Produktgaszusammensetzung, geregelt werden. Somit kann mit dem erfindungsgemäßen Verfahren die ideale Stöchiometrie für Oxo-Synthese (z. B. Hydroformylierung) eingestellt und erhalten werden. Damit reduziert sich der Fußabdruck der so erzeugten Oxo-Produkte entsprechend. Für die Produkte der Oxo-Synthese ergeben sich folglich weitere ökologische und wirtschaftliche Vorteile bei der Vermarktung. Eine zusätzliche Verwendung von grünem Methanol, Ethanol oder Gemischen davon in der Gasphase optional mit einem Gehalt an Wasser oder die alternative Verwendung von aus Biomasse erhaltenem Methan ermöglicht eine weitere Reduktion des CO₂- Fußabdrucks.

Das erfindungsgemäße Verfahren kann grundsätzlich kontinuierlich oder in Batch-Fahrweise betrieben werden. Da die Verfahren, bei denen Synthesegas als Rohstoff eingesetzt wird in der Regel kontinuierlich betrieben werden, ist es bevorzugt, wenn das vorliegende Verfahren ebenfalls kontinuierlich betrieben wird.

Das Verfahren nach der vorliegenden Erfindung kann in jeder beliebigen Vorrichtung durchgeführt werden, in der ein derartiges Plasmaverfahren durchgeführt werden kann. Vorzugsweise wird das Verfahren in einem Strömungsreaktor (0), der einen Gaseinlass (1), einen ersten Gasauslass (6) und einen zweitem Gasauslass (8) umfasst, durchgeführt, wobei die Eduktgaszusammensetzung über den Gaseinlass (1) zugeführt, im Strömungsreaktor (0) umgesetzt und die Produktgaszusammensetzung über den zweiten Gasauslass (8) abgeführt wird. Die Zuführung der Eduktgaszusammensetzung zum Strömungsreaktor (0) über einen tangentialen Gaseinlass (1.3) an einer Wirbelkammer (2) erfolgt. Der tangentiale Gaseinlass (1.3) entspricht in dieser bevorzugten Ausführungsform der Gaseinlass (1). Der Begriff "tangential" bezieht sich hier auf die Wirbelkammer (2). Der Gaseinlass (1.3) ist tangential zur Wirbelkammer (2) angeordnet. Die Eduktgaszusammensetzung wird vorzugsweise bereits am Gaseinlass (1) der Wirbelkammer (2) des Strömungsreaktors (0) die gewünschte Temperatur von größer oder gleich 1000 °C, insbesondere größer oder gleich 1300 °C, bevorzugt von größer oder gleich 1500 °C und besonders bevorzugt von größer oder gleich 1800 °C aufweisen. Die Messung der Temperatur kann wie oben beschrieben mittels optischer Verfahren oder über geeignete Sensoren erfolgen.

Der Gaseinlass (1) und der erste Gasauslass (6) sind vorzugsweise an der Wirbelkammer (2) des Strömungsreaktors (0) angeordnet. Der Strömungsreaktor (0) weist zudem vorzugsweise ein Reaktionsrohr (3.1) mit dem zweitem Gasauslass (8) auf. Der zweite Gasauslass (8) des Strömungsreaktors (0) liegt vorzugsweise räumlich betrachtet gegenüber des ersten Gasauslasses (1). Das wird in den erfindungsgemäßen Zeichnungen veranschaulicht.

Der Strömungsreaktor (0) für das erfindungsgemäße Verfahren umfasst weiterhin bevorzugt eine Anode (5) und eine Kathode (4), wobei die Anode an der Wirbelkammer (2) in Richtung des ersten Gasauslasses (6) und die Kathode (4) im Reaktionsrohr (3.1) angeordnet ist. Zwischen der Anode (5) und der Kathode (4) wird sich während des Verfahrens das Plasma (C) ausbilden.

Des Weiteren kann am Strömungsreaktor (0), insbesondere im Bereich des zweiten Gasauslasses (8), ein Wärmetauscher (20), insbesondere ein Hochtemperaturwärmetauscher, angeordnet sein, mit dem Energie in Form von Wärmeenergie von der Produktzusammensetzung auf die Eduktgaszusammensetzung übertragen werden kann. Mithilfe des Wärmetauschers (20) wird vorzugsweise die Produktzusammensetzung abkühlt und die Eduktgaszusammensetzung erwärmt.

In einer besonders bevorzugten Ausführungsform der vorliegenden Erfindung ist das Verfahren ein Verfahren zur Herstellung einer Produktgaszusammensetzung, die zumindest 10 bis 55 Vol.-%, Kohlenstoffmonoxid und 45 bis 90 Vol.-% Wasserstoff umfasst, durch Umsetzen einer Eduktgaszusammensetzung in einem Plasma bei einer Temperatur der Eduktgaszusammensetzung von größer oder gleich 1300 °C, vorzugsweise größer oder gleich 1500 °C, besonders bevorzugt größer oder gleich 1800 °C wobei die Eduktgaszusammensetzung
Wasserstoff oder eine Wasserstoffhaltige Gasmischung;
mindestens eine kohlenwasserstoffhaltige Verbindung, ausgewählt aus der Gruppe, bestehend aus Methan, Methanol und Mischungen von Methan und Methanol, und
mindestens ein Oxidationsmittel, ausgewählt aus der Gruppe, bestehend aus Kohlenstoffdioxid und einer Mischung umfassend Kohlenstoffdioxid und Wasser, umfasst, wobei das Verfahren
in einem Strömungsreaktor (0), der ein Anode (5), eine Kathode (5), eine Wirbelkammer (2), einen Gaseinlass (1), einen ersten Gasauslass (6) und einen zweitem Gasauslass (8) umfasst, durchgeführt, wobei die Eduktgaszusammensetzung über den Gaseinlass (1) zugeführt, im Strömungsreaktor umgesetzt und die Produktgaszusammensetzung über den zweiten Gasauslass (8) abgeführt wird.

Grundsätzlich ist es bevorzugt, die Eduktgaszusammensetzung der Wirbelkammer (2) so zuzuführen, dass innerhalb der Wirbelkammer (2) die Eduktgaszusammensetzung eine tangentiale Strömungsgeschwindigkeit von größer oder gleich 60 m/s, insbesondere größer oder gleich 80 m/s bis 100 m/s, besonders bevorzugt von größer oder gleich 80 m/s und kleiner oder gleich 95 m/s vorliegt.

Entsprechende Strömungsgeschwindigkeiten liegen dann auch im Rohrreaktor (3) bzw. dem Reaktionsrohr (3.1) vor. In Abhängigkeit von den gewünschten elektrischen und verfahrenstechnischen Betriebswerten kann das Plasma bspw. mit einer Länge von ungefähr 1 Meter in einem Rohrreaktor mit einer Länge größer 1 Meter zwischen der Anode und der Kathode erzeugt und betrieben werden.

Über den ersten Gasauslass (6), der sich vorzugsweise gegenüber des zweiten Gasauslasses (8) befindet, kann ein sogenannter Kaltgasstrom entnommen werden. Dieser Kaltgasstrom wird im Hinblick auf die chemische Zusammensetzung im Wesentlichen der Eduktgaszusammensetzung entsprechen, kann aber auch geringe Mengen an Kohlenstoffmonoxid enthalten. In einer bevorzugten Ausführungsform der vorliegenden Erfindung kann der Kaltgasstrom, der am ersten Gasauslass (6) entnommen wird mit der Eduktgaszusammensetzung vermischt bevor die Eduktgaszusammensetzung dem Strömungsreaktor (0) vor, im oder nach dem Wärmetauscher (20) zugeführt wird. Demzufolge kann die Eduktgaszusammensetzung durch die Zumischung des Kaltgasstroms auch Kohlenstoffmonoxid enthalten.

Gegenstand der vorliegenden Erfindung ist auch eine Vorrichtung zur Herstellung einer Produktgaszusammensetzung, die zumindest Kohlenstoffmonoxid und Wasserstoff umfasst, wobei die Vorrichtung einen Strömungsreaktor (0) mit einem ersten Gaseinlass (1), einen ersten Gasauslass (6), einen zweiten Gasauslass (8), mindestens einer Anode (5) und mindestens einer Kathode (4) zur Erzeugung eines Plasmas (C) und mindestens einen Wärmetauscher (20) sowie eine Membraneinheit (nicht dargestellt) umfasst.

Im Strömungsreaktor (0) findet das erfindungsgemäße Verfahren zur Umsetzung der Eduktgaszusammensetzung statt. Der Strömungsreaktor (0) ist vorzugsweise in Gravitationsrichtung oder im Wesentlichen senkrecht zum Untergrund ausgerichtet. Über den ersten Gaseinlass (1) wird die Eduktgaszusammensetzung zugeführt und in dem Plasma (C) zwischen der mindestens einen Anode (5) und der mindestens einen Kathode (4) umgesetzt. Die Produktgaszusammensetzung verlässt den Strömungsreaktor über den zweiten Gasauslass (8). Der erste Gasauslass (6) ist der Auslass für den sogenannten Kaltgasstrom. Der Wärmetauscher (20) dient dem Aufheizen der Eduktgaszusammensetzung und dem (gleichzeitigen) Abkühlen der Produktgaszusammensetzung. Der Wärmetauscher muss für die entsprechende Betriebstemperatur unter der Verwendung von geeigneten Werkstoffen (bspw. Korundkeramik - Al₂O₃-haltig, Bornitridkeramik, Siliziumcarbidkeramik usw. auf der Heißseite des Wärmetauschers und Sonderstähle wie z.B. hitzebeständige Stähle nach Tabelle 1 für die Kaltseite) designt und konstruiert sein.

**Tabelle 1: Übersicht über geeignete Stahlwerkstoffe**

| max. Einsatztemperatur | Stahl Werkstoff-Nr. | Kurzbezeichnung |
|---|---|---|
| 850 °C | 1.4724 | X10CrAlSi13 |
| 1.000 °C | 1.4828 | X15CrNiSi20-12 |
| 1.000 °C | 1.4742 | X10CrAlSi18 |
| 1.050 °C | 1.4845 | X12CrNi25-21 |
| 1.100 °C | 1.4876 | X10NiCrALTi32-21 |
| 1.150 °C | 1.4841 | X15CrNiSi25-21 |

Der Strömungsreaktor (0) umfasst je mindestens eine Anode (5) und eine Kathode (4). Es können demzufolge auch mehrere Anoden (5) und/oder mehrere Kathoden (4) vorhanden sein. In einer bevorzugten Ausführungsform umfasst der Strömungsreaktor (0) 2 bis 10 Anoden (5) und/oder 2 bis 10 Kathoden (4). Der Abstand zwischen der mindestens einen Anode (5) und der mindestens einen Kathode (4) beträgt vorzugsweise 1 cm bis 10 m, weiterhin bevorzugt sind 20 cm bis 8 m, besonders bevorzugt 20 cm bis 2 m.

Die mindestens eine Kathode (4) enthält vorzugsweise Eisen. Besonders bevorzugt ist die mindestens eine Kathode (4) aus Eisen oder einer Eisenlegierung gebildet. Sofern mehrere Kathoden (4) vorliegen, können die Kathoden jeweils aus dem gleichen oder einem unterschiedlichen Material bestehen. Um die Kathodenlaufzeit zu erhöhen kann eine Abscheidung von Kohlenstoff auf der Kathode (4) forciert werden oder die Abscheidung von Kohlenstoff bzw. die Abreaktion von Kohlenstoff auf der Kathode (4) durch eine gezielte Einstellung des Gehaltes an Wasserstoff in der Eduktgaszusammensetzung geregelt werden.

Die mindestens eine Anode (5) enthält vorzugsweise Kupfer. Die mindestens eine Anode (5) ist zudem besonders bevorzugt eine Hohlanode und besteht vorzugsweise aus Kupfer oder einer Kupferlegierung oder einer Kupfer-Silber-Barium enthaltenden Legierung. Sofern mehrere Anoden (5) vorliegen, können die Anoden jeweils aus dem gleichen oder einem unterschiedlichen Material bestehen.

Der Wärmetauscher (20) ist vorzugsweise einen Hochtemperaturwärmetauscher. In einer bevorzugten Ausgestaltung umfasst der Wärmetauscher (20) mindestens zwei Hohlkörper, die ineinander geführt sind, d. h. es gibt zumindest einen inneren Hohlkörper und zumindest einen äußeren Hohlkörper, insbesondere eine Ausgestaltung Rohr-in-Rohr. In einer bevorzugten Ausführungsform der vorliegenden Erfindung weist der Wärmetauscher (20) eine Vielzahl an inneren und äußeren Hohlkörpern auf. Dadurch wird die Fläche für die Übertragung von Energie größer und die Energieübertragung zwischen Produktgaszusammensetzung und Eduktgaszusammensetzung verläuft einfacher und schneller.

Der zumindest eine innere Hohlkörper ist für das Durchströmen der Produktgaszusammensetzung vorgesehen. Als Material für die Fertigung des zumindest einen inneren Hohlkörpers kann keramisches Material beispielsweise Aluminiumoxid, insbesondere Korund, eingesetzt werden. Der zumindest eine äußere Hohlkörper ist für das Durchströmen der Eduktgaszusammensetzung vorgesehen. Als Material für die Fertigung des zumindest einen äußeren Hohlkörpers kann beispielsweise Stahl, insbesondere Spezialstahl oder Schwarzstahl, eingesetzt werden. Der Wärmetauscher (20) arbeitet vorzugsweise nach dem Gegenstromprinzip, d. h. die Edukt- und die Produktgaszusammensetzung werden gegenläufig durch die Hohlkörper des Wärmetauschers (20) geführt. Die Länge der beiden Hohlkörper und die Wandstärke des ersten Hohlkörpers kann bei definierten Strömungsgeschwindigkeiten und bei definiertem Druck anhand der Temperaturdifferenz zwischen Produktgaszusammensetzung und Eduktgaszusammensetzung im Wärmetauscher (20) festgelegt werden.

In einer bevorzugten Ausführungsform der vorliegenden Erfindung umfasst Strömungsreaktor (0) weiterhin
eine Wirbelkammer (2) mit tangentialem Gaseinlass (1.3), dem erstem Gasauslass (6) und die mindestens eine Anode (5) und
ein an der Wirbelkammer angeordnetes Reaktionsrohr (3.1), vorzugsweise ein in Gravitationsrichtung oder vertikal zum Untergrund ausgerichtetes Reaktionsrohr (3.1), mit zweitem Gasauslass (8) und mindestens einer Kathode (4) umfasst, wobei
die mindestens eine Anode (5) axial in der Wirbelkammer (2) oder axial im ersten Gasauslass (6) der Wirbelkammer und die mindestens eine Kathode (4) im Reaktionsrohr (3.1) angeordnet ist, und
die Eduktgaszusammensetzung vor dem Zuführen zur Wirbelkammer (2) den Wärmetauscher (20) durchläuft und am zweiten Gasauslass (8) eine Ableitung (11) angeordnet ist, über die die Produktgaszusammensetzung durch den Wärmetauscher (20) geführt wird, wobei im Wärmetauscher (20) Energie in Form von Wärmeenergie von der Produktgaszusammensetzung auf die Eduktgaszusammensetzung übertragen wird.

Die Zuführung der Eduktgaszusammensetzung in den Strömungsreaktor (0) erfolgt demnach über einen tangentialen Gaseinlass (1.3) in die Wirbelkammer (2) und sorgt für die notwendige Verwirbelung der Eduktgaszusammensetzung. Tangential meint im Rahmen der vorliegenden Erfindung, dass der Gaseinlass tangential zur, insbesondere tangential zum äußeren Radius der Wirbelkammer (2) angeordnet ist. Der tangentiale Gaseinlass (1.3) ist dabei insbesondere senkrecht zur Längsmittelachse des Strömungsreaktor (0) angeordnet. Der Ursprung des Radius der Wirbelkammer liegt dabei insbesondere auf der Längsmittelachse des Strömungsreaktors, wobei diese Längsmittelachs vorzugsweise auch auf der Längsmittelachse des Rohrreaktors (3) bzw. des Reaktionsrohrs (3.1) liegt. Der Begriff Rohrreaktor (3) wird vorliegenden synonym zum Begriff Reaktionsrohr (3.1) verwendet. Der Rohrreaktor (3) ist insbesondere in Gravitationsrichtung angeordnet.

Die Wirbelkammer (2) umfasst zudem den ersten Gasauslass (6) und die mindestens eine Anode (5). Die Anode (5) ist vorzugsweise an der Wirbelkammer in Richtung des ersten Gasauslasses (6) oder im Gasauslass (6) angeordnet. Die Anode (5) kann weiterhin axial in der Wirbelkammer (2) oder axial im ersten Gasauslass (6) der Wirbelkammer (2) angeordnet. Die Anode (5) ist vorzugsweise eine Hohlanode aus Kupfer oder einer Kupferlegierung oder eine Kupfer-Silber-Barium enthaltende Legierung.

Der erste Gasauslass (6) ist vorzugsweise an einen geschlossenen Hohlraum angeschlossen, wobei die Anode in dem ersten Gasauslass (6) oder in dem Hohlraum angeordnet sein kann. In dieser Ausführungsform wird die kältere Strömung der Eduktgaszusammensetzung in den Hohlraum geleitet, im Hohlraum gestaut und in die Wirbelkammer (2) zurückgeführt. Alternativ kann der erste Gasauslass als Düse, insbesondere als Diffusor ausgebildet sein.

Der Strömungsreaktor (0) weist neben der Wirbelkammer (2) mit tangentialem Gaseinlass (1.3) ein an der Wirbelkammer (2) angeordnetes Reaktionsrohr (3.1) auf, das räumlich betrachtet insbesondere unterhalb der Wirbelkammer (2) angeordnet ist. Das Reaktionsrohr (3.1) umfasst den zweitem Gasauslass (8), vorzugsweise am Fuß des Reaktionsrohres (3.1), d. h. in Gravitationsrichtung am unteren Ende des Reaktionsrohres (3.1). Der erste Gasauslass (6), der sich in der Wirbelkammer (2) befindet, und der zweite Gasauslass (8) liegen sich vorzugsweise gegenüber.

Die Wirbelkammer (2) ist vorzugsweise rund ausgestaltet. Der Durchmesser der Wirbelkammer (2) beträgt vorzugsweise von 50 mm bis 1000 mm. Die Längsmittelachsen von Wirbelkammer (2) und Reaktionsrohr (3.1) liegen vorzugsweise aufeinander. Das Verhältnis des Durchmessers der Wirbelkammer (2) zum Durchmesser des Reaktionsrohres (3.1) beträgt vorzugsweise von 1 : 1 bis 1 : 2, besonders bevorzugt 1 : 1,1 bis 1 : 1,5.

Das Reaktionsrohr (3.1) umfasst weiterhin mindestens eine Kathode (4). Es können auch mehrere Kathoden (4) vorliegen. Zwischen der mindestens einen Anode (5) und der mindestens einen Kathode (5) wird sich dann, wie erwähnt, das für die Umsetzung der Eduktgaszusammensetzung benötigte Plasma (C) ausbilden. Alle übrigen Komponenten des Strömungsreaktors sind insbesondere jeweils unabhängig voneinander, in Gruppen oder gemeinsam geerdet. Die mindestens eine Kathode (5) ist dazu vorzugsweise im mittleren Bereich des Rohrreaktors umlaufend ausgebildet. Die mindestens eine Kathode (5) kann dabei eine Höhe von 800 bis 1500 mm aufweisen. Zudem ist bei der Kathode (5) eine Materialdicke von 50 bis 150 mm bevorzugt. Besonders bevorzugt ist eine Materialdicke der Kathode (5) von 85 bis 95 mm.

Das Plasma (C) wird durch Anlegen einer Wechselspannung (AC) oder einer Gleichspannung (DC) erzeugt. Die elektrische Leistung für Erzeugung und Erhalt des Plasmas liegt vorzugsweise im Bereich von 500 kW bis 10.000 kW, besonders bevorzugt im Bereich von 6500 bis 8000 kW. Im Plasma (C) können Kerntemperaturen von bis zu 2700 °C und höher auftreten. Die Wirbelkammer (2) und insbesondere die Anordnung des vorzugsweise tangentialen Gaseinlasses (1) dient dazu dem Gasstrom der Eduktgaszusammensetzung einen Drall zuzuführen. Durch die Verwirbelungen der eintretenden Eduktgaszusammensetzung wird auch das Plasma in Bewegung bleiben und das Risiko, dass die Kathode (4) durchbrennt, wird minimiert. Zudem wird durch diese Ausführungsform der Strömungsreaktor (0) als Vortex betrieben, wobei die kälteren inneren Strömungen gegenläufig zu den äußeren heißeren Strömungen geführt werden. Die kälteren Strömungen können die Anode (5) kühlen. Der kältere Gasstrom, der vornehmlich aus der Eduktgaszusammensetzung besteht, kann, sofern am ersten Gasauslass (6) ein Hohlraum angeordnet ist, zurück zur Wirbelkammer (2) gelangen oder über den ersten Gasauslass (6) über einer Gasleitung herausgeführt werden und optional zur Vorheizung der Eduktgaszusammensetzung, die dem Gaseinlass (1) zugeführt wird, dienen. Die heißeren Strömungen der Eduktgaszusammensetzung werden in das Reaktionsrohr (3.1) geleitet, im Plasma umgesetzt und treten am zweiten Gasauslass (8) aus dem Strömungsreaktor als Produktgaszusammensetzung aus. Im Bereich des zweiten Gasauslasses kann vorzugsweise ein Strömungswiderstand, insbesondere ein Prallformkörper, wie ein Kegel oder mindestens eine Platte, angeordnet sein. Alternativ oder zusätzlich kann der zweite Gasauslass als Konfusor ausgebildet sein.

Die Produktgaszusammensetzung wird vorzugsweise über den zweiten Gasauslass (8) in den Wärmetauscher (20) geführt, insbesondere um dort auf kleiner oder gleich 600 °C abgekühlt zu werden, wobei die Eduktgaszusammensetzung im Wärmeaustauscher vorzugsweise auf 700°C, vorzugsweise größer 1000 °C oder bis zu 1150 °C erhitzt wird. Aus dem Wärmetauscher (20) führt eine Gasleitung zum Gaseinlass (1), worüber die im Wärmetauscher (20) erhitzte Eduktgaszusammensetzung zum Strömungsreaktor (0) gelangt.

Das Reaktionsrohr (3.1) kann aufgrund der hohen Temperaturen eine Kühlung (9) aufweisen, die vorzugsweise als Mantelkühlung ausgestaltet ist. Dabei ist das Reaktionsrohr (3.1) mit einer äußeren Kühlung ummantelt. Die Kühlung kann mittels Wasser, Wasserdampf, Ölen oder Kühlmitteln erfolgen. Die Kühlung wird vorzugsweise im Gegenstromprinzip zur Strömung der Eduktgaszusammensetzung im Reaktionsrohr geführt. Darüber hinaus kann das Reaktionsrohr (3.1) vor oder im Bereich des zweiten Gasauslasses (8) eine Zuführung für Wasser und/oder einem einwertigen Alkohol und/oder ein Quench aufweisen, was der weiteren Kühlung dienen kann.

Die erfindungsgemäße Vorrichtung kann demzufolge in mindestens drei Module (M1, M2, M3) aufgeteilt werden. Die erfindungsgemäße Vorrichtung umfasst mindestens die folgenden drei Module M1, M2 und M3, wobei

das erste Modul (M1) eine Mischvorrichtung (16) zur Herstellung der Eduktgaszusammensetzung umfasst, wobei die kohlenwasserstoffhaltige Verbindung über eine KW-Leitung (12), das Kohlendioxid über eine Kohlendioxidleitung (13), der Wasserstoff über eine Wasserstoffleitung (14), optional oder zusätzlich Ammoniak und Wasser oder Wasserdampf über eine Wasserleitung (15) zur Mischvorrichtung (16) geführt und dort vermischt werden und aus der Mischvorrichtung (16) über die Eduktgasleitung (17) die Eduktgaszusammensetzung entnommen wird,
wobei das erste Modul (M1) mindestens einen ersten Prozessor, mit dem die Zusammensetzung oder der Volumenstrom der Eduktgaszusammensetzung eingestellt wird, und ein mindestens eine erste Computerschnittstelle, über die das erste Modul (M1) in eine Prozessorchestrierungsebene (POL) eingebunden wird, wobei der mindestens eine erste Prozessor über die mindestens eine Computerschnittstelle angesteuert werden kann, umfasst;
das zweite Modul (M2) den Wärmetauscher (20) umfasst, wobei die Eduktgaszusammensetzung über die Eduktgasleitung (17) zum Wärmetauscher (20) geführt wird und den Wärmetauscher (20) über eine Zuleitung (10) verlässt und wobei die Produktgaszusammensetzung aus dem Strömungsreaktor (0) über die Ableitung (11) zum Wärmetauscher geführt wird und im Wärmetauscher (20) Energie in Form von Wärmeenergie von der Produktgaszusammensetzung auf die Eduktgaszusammensetzung übertragen wird,
wobei das zweite Modul (M2) mindestens einen zweiten Prozessor, mit dem der Volumenstrom und/oder die Temperatur der Eduktgaszusammensetzung in der Zuleitung (10) und/oder der Volumenstrom und/oder die Temperatur der Produktgaszusammensetzung in der Ableitung (11) geregelt wird, und mindestens eine zweite Computerschnittstelle, über die das zweite Modul (M2) in eine Prozessorchestrierungsebene (POL) eingebunden wird, wobei der mindestens eine erste Prozessor über die mindestens eine zweite Computerschnittstelle angesteuert werden kann, umfasst;
das dritte Modul (M3) den Strömungsreaktor (0) umfasst, wobei die Eduktgaszusammensetzung aus dem Wärmetauscher (20) über die Zuleitung (10) zugeführt wird, im Strömungsreaktor in einem Plasma bei einer Gastemperatur von größer oder gleich 1000 °C umgesetzt und eine Produktgaszusammensetzung den Strömungsreaktor (0) über die Ableitung (11) verlässt,
wobei das dritte Modul mindestens einen dritten Prozessor, mit dem die Energiedichte des Plasmas (C) und/oder die Verweilzeit im Reaktionsrohr (3.1) und optional die Kühlung (9) im Strömungsreaktor (0) in Abhängigkeit vom Volumenstrom der Eduktgaszusammensetzung in der Zuleitung (10), von der Temperatur der Eduktgaszusammensetzung in der Zuleitung (10) und/oder der molaren Zusammensetzung der Eduktgaszusammensetzung in der Zuleitung (10), geregelt wird, und mindestens eine Computerschnittstelle, über die das dritte Modul (M3) in eine Prozessorchestrierungsebene (POL) eingebunden wird, wobei der mindestens eine erste Prozessor über die mindestens eine zweite Computerschnittstelle angesteuert werden kann, umfasst; und wobei
die Vorrichtung eine Prozessorchestrierungsebene (POL) umfasst, die der Integration und funktionalen Ansteuerung des mindestens einen ersten Moduls (M1), des mindestens einen zweiten Moduls (M2) und/oder des mindestens einen dritten Moduls (M3) dient.

Die erfindungsgemäße Vorrichtung umfasst weiterhin bevorzugt ein viertes Modul M4. Das optionale 4. Modul (M4) umfasst einen Wärmetauscher, wobei die Produktzusammensetzung aus dem Wärmetauscher über die Zuleitung von M3 kommend zugeführt wird, im Wärmetauscher bei einer Gastemperatur von größer 40 °C und kleiner oder gleich 700°C auf 40°C mittels Kühlmedium abgekühlt wird und die Produktgaszusammensetzung den Wärmetauscher über das Ableitrohr verlässt, wobei das vierte Modul mindestens einen vierten Prozessor, mit dem die Energiedichte der Produktgaszusammensetzung, die Temperatur und/oder die Verweilzeit im Wärmetauscher und optional die Kühlung im Wärmetauscher in Abhängigkeit vom Volumenstrom der Prozessgaszusammensetzung im Zuleitungsrohr, von der Temperatur der Eduktgaszusammensetzung und/oder der molaren Zusammensetzung der Eduktgaszusammensetzung in der Zuleitung (10), geregelt wird, und mindestens eine Computerschnittstelle, über die das vierte Modul (M4) in eine Prozessorchestrierungsebene (POL) eingebunden wird, wobei der mindestens eine erste Prozessor über die mindestens eine zweite Computerschnittstelle angesteuert werden kann, umfasst;

Es ist erfindungsgemäß bevorzugt, dass das erste Modul mit einem Gasvorrat oder einer Pipeline verbunden ist, über die ein ständiger Zustrom an der kohlenwasserstoffhaltigen Verbindung möglich ist. Zudem sind die einzelnen Module so miteinander über Leitungen und/oder Anschlüsse zu verbinden, dass die durchzuführenden Schritte des erfindungsgemäßen Verfahrens hintereinander erfolgen können. Die modulare Bauweise erlaubt es die Anlage schnell und unkompliziert in einer Fertigung vorzuproduzieren und international schnell verfügbar zu machen. So kann die modulare Anlage in Europa vorproduziert werden und auf einfache Weise an weiter entfernten Standorten mit den dort verfügbaren Kohlenwasserstoff- und/oder Kohlendioxidquellen installiert werden.

Die Vorrichtung umfasst bei Vorliegen eines vierten Modulks (M4) eine Prozessorchestrierungsebene (POL), die der Integration und funktionalen Ansteuerung des mindestens einen ersten Moduls (M1), des mindestens einen zweiten Moduls (M2), des mindestens einen dritten Moduls (M3) und/oder des vierten Moduls (M4) dient.

Das erste Modul dient somit der Einstellung bzw. Regelung der Zusammensetzung oder des Volumenstroms der Eduktgaszusammensetzung. Die Einstellung erfolgt über einen Prozessor. Der entsprechende Aufbau und die Kalibrierung ist in der Anwendungstechnik hinlänglich bekannt. Über eine Computerschnittstelle wird der Prozessor des ersten Moduls in eine Prozessorchestrierungsebene (POL) eingebunden und kann so automatisiert mit den anderen Prozessoren der anderen Module kommunizieren.

Der jeweilige Prozessor des ersten, zweiten und/oder dritten und/oder vierten Moduls usw. entspricht vorzugsweise einem Module Type Package (MTP) der die Schnittstellen und Funktionen der Automatisierungstechnik definiert und die Integration des Moduls in eine Prozessorchestrierungsebene (POL) ermöglicht. Alle Module können unabhängig voneinander Regelventile aufweisen, so dass die Regelventile durch die POL angesteuert und geregelt werden können.

Es ist bevorzugt, wenn das jeweilige Modul der Anlage (erstes, zweites und/oder drittes Modul) jeweils mindestens ein durch einen Prozessor ansteuerbares und einstellbares Regelventil je Gasleitung aufweist. Vorteilhaft umfasst das erste Modul jeweils unabhängige Regelventile zur Einstellung des jeweiligen Volumenstroms der Kohlenwasserstoffleitung, Kohlendioxidleitung, Wasserstoffleitung und/oder der optionalen Wasserleitung.

Über die Prozessorchestrierungsebene (POL) ist es demnach möglich die Anlage so zu regeln, dass beispielsweise ein vorgegebener molaren Gehalt und/oder Volumenstrom an Kohlendioxid in der Eduktgaszusammensetzung verarbeitet oder ein vorher festgelegter molarer Gehalt an Kohlenstoffmonoxid und/oder Wasserstoff in der Produktgaszusammensetzung erreicht werde kann.

Besonders bevorzugt ist die Prozessorchestrierungsebene (POL) so eingestellt, dass im ersten Modul Zusammensetzung oder der Volumenstrom der Eduktgaszusammensetzung, im zweiten Modul der Volumenstrom der Eduktgaszusammensetzung und/oder der Volumenstrom der Produktgaszusammensetzung und im dritten Modul die Energiedichte des Plasmas (C) und/oder die Verweilzeit im Reaktionsrohr (3.1) und optional die Kühlung (9) im Strömungsreaktor (0) in Abhängigkeit vom Volumenstrom der Eduktgaszusammensetzung, von der Temperatur der Eduktgaszusammensetzung und/oder der molaren Zusammensetzung der Eduktgaszusammensetzung so geregelt wird, dass ein vorher festgelegter Gehalt an Kohlenstoffmonoxid und/oder Wasserstoff in der Produktgaszusammensetzung erhalten wird. Die Eduktgaszusammensetzung kann weitere Bestandteile enthalten: Im Fall von Biogas neben Wasserdampf bspw. H₂S und NH₃.

Die Produktgaszusammensetzung kann nach Herausführen aus dem zweiten Gasauslass (8) oder aus dem Wärmetauscher (20) von sauren Bestandteilen, wie H₂S und CO₂, gereinigt und der weiteren Verwendung zugeführt werden. Bekannte weitere Verwendungen des hergestellten Synthesegases oder Wasserstoffs sind hinlänglich bekannt und umfassen die NH₃-Synthese, die bereits erwähnte Oxo-Synthese und/oder die Alkoholsynthese (z.B. Methanol- und/oder Ethanolsynthese).

Die erfindungsgemäße Vorrichtung kann ferner eine Vielzahl von Strömungsreaktoren, d. h. mehr als ein drittes Modul (M3) aufweisen. Sofern mehrere dritte Module (3) vorhanden sind, sind entsprechend viele Prozessoren vorhanden, die jeweils unabhängig voneinander über die Prozessorchestrierungseben (POL) gesteuert werden können.

In einer weiterhin bevorzugten Ausführungsform kann der Zustand der Kathode über eine Widerstandsmessung in regelmäßigen oder unregelmäßigen Abständen kontrolliert und überwacht werden. Die Widerstandsmessung ist ein Maß für die Verrußung bzw. Kohlenstoffablagerung auf der Kathode. Je nach Verrußung der Kathode kann der Gehalt an Wasserstoff in der jeweiligen Eduktgaszusammensetzung erhöht oder erniedrigt werden. Möglich wäre, dass über die Widerstandsmessung ein Austausch der Kathode angeregt wird.

Die Erfindung wird anhand der in den Figuren gezeigten Ausführungsformen näher erläutert, ohne die Erfindung auf diese Ausführungsbeispiele zu begrenzen. Es zeigen:
- Fig. 1:: Fließschema der Vorrichtung zur Herstellung der Produktgaszusammensetzung umfassend das erste Modul (M1), das zweite Modul (M2) und das dritte Modul (M3).
- Fig. 2:: Längsschnitt des Strömungsreaktors (0) mit Wirbelkammer (2) und Reaktionsrohr (3.1) mit Kaltgasauslass (A) und Heißgasauslass (B).
- Fig. 3:: Querschnitt der Wirbelkammer (2) mit Gaseinlass (1) und mit Strömungsvorrichtung (21)
- Fig. 4:: Längsschnitt des Strömungsreaktors (0) mit Wirbelkammer (2) und Reaktionsrohr (3.1) mit Strömungsvorrichtung (21) und Ausbildung des Plasmas (C).

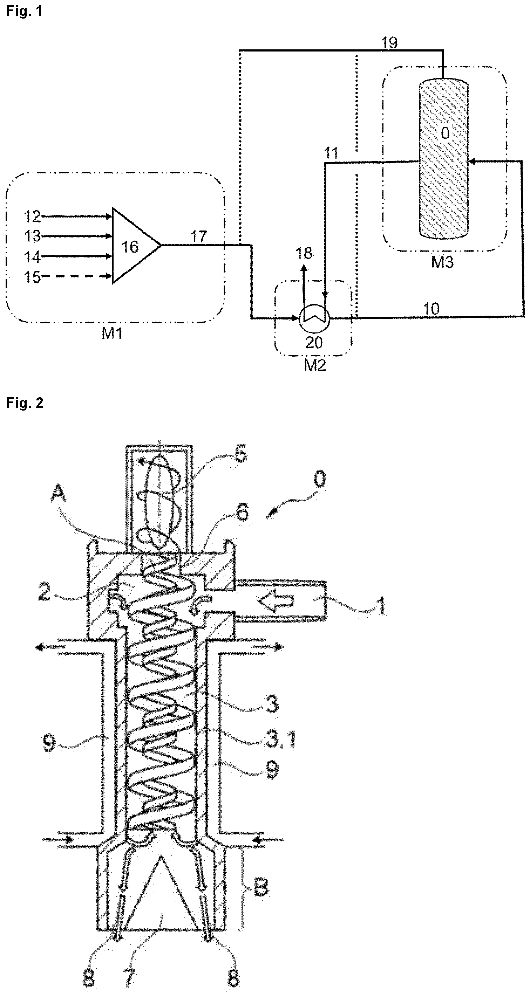

Die Figur 1 stellt ein Fließschema einer Anlage mit Strömungsreaktor (0) und Wärmetauscher (20) dar. Über die Leitungen (12, 13, 14 und 15) werden die Komponenten der Eduktgaszusammensetzung, d. h. die kohlenstoffhaltige Verbindung über die Leitung (12), Kohlenstoffdioxid über die Leitung (13), Wasserstoff über die Leitung (14) und optional Wasser oder Wasserdampf über die Leitung (15), zur Vorrichtung (16) zur Herstellung der Eduktgaszusammensetzung zugeführt. In der Vorrichtung (16) werden die Komponenten zur Eduktgaszusammensetzung gemischt und über die Gasleitung (17) zum Wärmetauscher (20) geführt und dort erhitzt. Nach dem die Eduktgaszusammensetzung den Wärmetauscher (20) passiert hat, verlässt sie diesen über die Gasleitung (10) und wird zum Gaseinlass (1) des Strömungsreaktors (0) geführt. Die Eduktgaszusammensetzung weist dann bereits vorteilhaft eine Temperatur von größer oder gleich 1000 °C auf. Über die Gasleitung (11) am zweiten Gasauslass (8, nicht gezeigt) verlässt die Produktgaszusammensetzung den Strömungsreaktor (0) und wird dem Wärmetauscher (20) zugeführt, in dem die Produktgaszusammensetzung durch Wärmeübertragung auf die Eduktgaszusammensetzung vorzugsweise auf ungefähr 700 °C abkühlt wird. Die Produktgaszusammensetzung verlässt dann den Wärmetauscher (20) über die Gasleitung (18). Im Strömungsreaktor (0) fällt zusätzlich ein Kaltgasstrom an, der vorzugsweise nur geringfügig, d. h. um wenige Grad Celsius, kühler ist als die Eduktgaszusammensetzung im Gaseinlass (1). Der Kaltgasstrom wird hier über die Leitung (19) am ersten Gasauslass (6, nicht gezeigt) entnommen und kann der Eduktgaszusammensetzung zur Vorerwärmung bspw. in der Gasleitung (17) und/oder der Produktgaszusammensetzung in der Gasleitung (10) zugeführt werden (gestrichelte Linien ausgehend von Leitung (19) in Figur 1). Möglich wäre auch, dass der Kaltgasstrom im Wärmetauscher 20 dem Gasstrom der Eduktgaszusammensetzung zugemischt wird (nicht eingezeichnet). In Figur 1 sind weiterhin das erste Modul (M1), das zweite Modul (M2) und das dritte Modul (M3) der Anlage markiert.

Figur 2 zeigt einen schematischen Längsschnitt des Strömungsreaktors (0). Der Längsschnitt schneidet durch den Gaseinlass (1). Die Eduktgaszusammensetzung wird über den Gaseinlass (1) als Gasstrom in die Wirbelkammer (2) des Strömungsreaktors (0) zugeführt. In der Wirbelkammer wird der Gasstrom verwirbelt und gelangt von dort in die Reaktionskammer (3) des Reaktionsrohres (3.1). Am unteren Ende des Reaktionsrohres (3.1) befindet sich ein Strömungswiderstand (7), der insbesondere in Form eines Prallformkörpers wie eines kegelförmigen Körpers ausgebildet ist oder aus mindestens einer Platte besteht. Dadurch wird aus dem Strömungsreaktor ein Wirbelrohr. Der Gasstrom bildet einen Heißgasstrom, der in Richtung des zweiten Gasauslasses (8) im Bereich des Heißgasauslasses (B) strömt, und einen Kaltgasstrom, der gegenläufig in Richtung auf den ersten Gasauslass (6) im Bereich des Kaltgasauslasses (A) strömt. Der Kaltgasstrom strömt durch den ersten Gasauslass (6) zur mindestens eine Anode (5) und kann diese umströmen und kühlen. Der Kaltgasstrom kann dann entweder in den Strömungsreaktor (0) zurückströmen oder oben am Kopf über die in den Figur 1 dargestellte Leitung (19) zurückgeführt werden. Außen am Reaktionsrohr (3.1) ist eine Kühlung (9) vorgesehen, beispielsweise eine gegenläufige, umlaufende Rohrkühlung, durch die ein Kühlmedium, wie Wasser oder ein Öl, geführt wird.

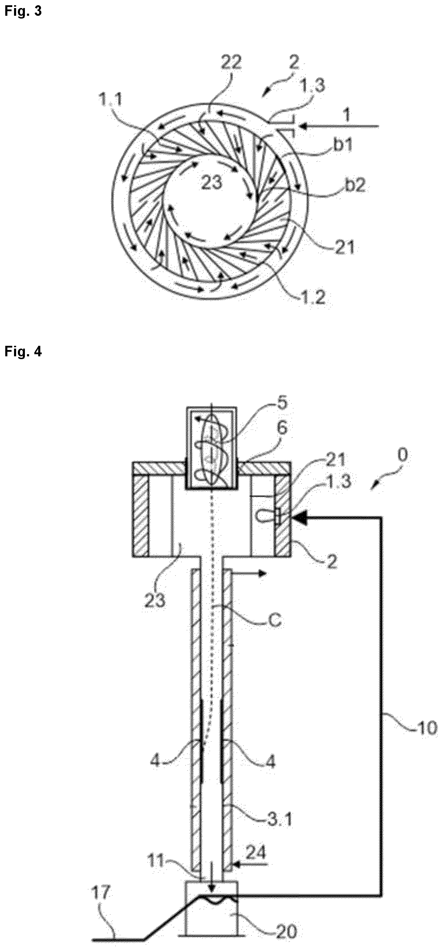

Figur 3 zeigt einen Querschnitt des Strömungsreaktors (0) bzw. der Wirbelkammer (2). Der Querschnitt schneidet dabei durch den Gaseinlass (1). Über den Gaseinlass wird die Eduktgaszusammensetzung als Gasstrom der Wirbelkammer (2, hier nicht gezeigt) zugeführt, indem der Gasstrom durch mindestens einen Gaseinlass (1), der senkrecht zur Längsmittelachse des Strömungsreaktors (0) angeordnet ist, tangential zur Wirbelkammer (2) (tangentialer Gaseinlass (1.3)) zugeführt wird. Von dort gelangt der Gasstrom in einen äußeren Strömungskanal (22), von dem aus Gaskanäle (1.1), die jeweils eine Eintrittsbreite (b.1) und eine Austrittsbreite (b.2) aufweisen und am inneren Rand des Reaktionsrohres (3.1) befindlichen Strömungsvorrichtung (21) ausgebildet sind, in Strömungsrichtung nach unten führen. Dadurch wird der Gasstrom in die innere Wirbelkammer (23) überführt. Die Gaskanäle (1.1) können durch Wände (1.2) oder Schaufeln ausgebildet werden. In alternativen Ausführungsformen können auch mehrere, beispielsweise 2 bis 20 Gaseinlässe (1) peripher und radial vorzugsweise symmetrisch beabstandet in die Wirbelkammer führen.

Figur 4 zeigt einen weiteren schematischen Längsschnitt des Strömungsreaktors (0) mit Verknüpfung zum Wärmetauscher (20). Die Eduktgaszusammensetzung wird als Gasstrom über den tangentialen Gaseinlass (1.3) der Wirbelkammer (2) mit erstem Gasauslass (6) und Anode (5) und mit Strömungsvorrichtung (21) zugeführt, und gelangt über die Gaskanäle (1.1, hier nicht gezeigt) in die innere Wirbelkammer (23). Von der inneren Wirbelkammer (23) gelangt der Gasstrom in das Reaktionsrohr (3.1). Die Wirbelkammer (2) bzw. die innere Wirbelkammer (23) und das Reaktionsrohr (3.1) weisen eine gemeinsame Längsachse auf, die auch die Längsachse des gesamten Strömungsreaktors (0) bildet. Im Reaktionsrohr (3.1) befindet sich die Kathode (4), beispielsweise als umlaufender Ring. Zwischen Kathode (4) und Anode (5) bildet sich im Betrieb das Plasma (C) aus. Die dadurch entstehende Produktgaszusammensetzung wird über den Heißgasauslass (B) und die Leitung (11) zum Wärmetauscher (20) geführt und dort für die Erhitzung der Eduktgaszusammensetzung, die über die Gasleitung (17) zum Wärmetauscher (20) und von dort über die Gasleitung (10) zum Gaseinlass (1) des Strömungsreaktors (0) geleitet wird, eingesetzt. Im Bereich des Heißgasauslasses (B) kann ein Quench (24) vorgesehen sein.

### Bezugszeichen:

- A: Kaltgasauslass
- B: Heissgasauslass
- C: Plasma (Lichtbogen)
- M1: erstes Modul
- M2: zweites Modul
- M3: drittes Modul
- 0: Strömungsreaktor
- 1: Gaseinlass
- 1.1: Gaskanal
- b1: Breite Eintritt in Gaskanal
- b2: Breite Austritt Gaskanal
- 1.2: Wand oder Schaufel
- 1.3: tangentialer Gaseinlass
- 2: Wirbelkammer, insbesondere Vortex
- 3: Reaktionskammer, Reaktionskammer im Rohrreaktor
- 3.1: Reaktionsrohr
- 4: Kathode
- 5: Anode
- 6: erster Gasauslass
- 7: Strömungswiderstand
- 8: zweiter Gasauslass
- 9: Kühlung Strömungsreaktor
- 10: Gasleitung zum Gaseinlass (1)
- 11: Gasleitung zum Wärmetauscher (20)
- 12: Leitung für die kohlenstoffhaltige Verbindung, KW-Leitung
- 13: Kohlenstoffdioxidleitung
- 14: Wasserstoffleitung
- 15: optionale Wasserleitung
- 16: Mischvorrichtung zur Herstellung der Eduktgaszusammensetzung
- 17: Edulktgasleitung für die Eduktgaszusammensetzung zum Wärmetauscher (20)
- 18: Gasleitung Produktgaszusammensetzung vom Wärmetauscher
- 19: Gasleitung Produktgaszusammensetzung vom ersten Gasauslass Strömungsreaktor in Wärmetauscher 20,
- 20: Wärmetauscher
- 21: Strömungsvorrichtung
- 22: äußerer Strömungskanal
- 23: innere Wirbelkammer
- 24: Quench bzw. Zuführung Wasser

Die vorliegende Erfindung wird anhand der nachfolgenden Beispiele beschrieben.

Die Herstellung von Synthesegas unterscheidet man nach
a) Wassergas, das aus Kohle und Wasserdampf erhalten wird (C + H₂O) → (CO + H₂),
b) Generatorgas (Luftgas), das aus Kohle und Luft erhalten wird (C + 1/2 O₂ → CO), und
c) Spaltgas, das aus der Erdgas- und Erdölspaltung erhalten wird (CH₄ + H₂O → CO + 3 H₂).

Je nach Verwendungszweck unterscheidet man zwischen
1.) Synthesegas (CO + 2 H₂) zur Methanolherstellung,
2.) Synthesegas (N₂ + 3 H₂) zur Ammoniakherstellung und
3.) Synthesegas (CO + H₂) für die Oxosynthese.

### Beispiel 1

1 kg Synthesegas wird mittels Dampfreforming aus Zufuhr von 0,47 kg Methan und 0,53 kg Wasserdampf in einen beheizten katalytischen Reaktor hergestellt. Die Reaktion zwischen Methan und Wasserdampf erfolgt bei hohen Temperaturen (ca. 700 bis 1000°C) und hohem Druck (ca. 20 bis 30 bar) unter Bildung von Synthesegas gemäß folgender Reaktionen:

CH₄ + H₂O → CO + 3H₂

CO₂ + H₂ → CO + H₂O

Das den Reaktor verlassende Synthesegas wird in Wärmetauschern schrittweise abgekühlt.

### Fall A)

Das resultierende Synthesegas besteht aus einer Mischung von 84,8 Gew.-% Kohlenmonoxid (CO) und 15,2 Gew.-% Wasserstoff (H₂) was einem Verhältnis von etwa 1:2,5 entspricht. Der spezifischer Energieaufwand für die Prozessierung beträgt rund 3 kWh/kg Synthesegas der durch die Oxidation von Methan bereitgestellt wird.

Die CO₂-Bilanz der Synthesegasherstellung mittels Dampfreformierung ergibt bei einem Einsatz von 3 kWh/kg Synthesegas einen Wert von 186,9 kg CO₂/100 kg Synthesegas. Dieser setzt sich zusammen aus dem CO2 Footprint des Kohlenstoffmonoxid im Synthesegas selbst in Höhe von 133,3 kg CO₂/100 kg Synthesegas (berechnet nach 84,8 kg CO*44/28 = 133,2 kg) sowie 300 kWh/100 kg Synthesegas aus Methan, das zu CO₂ und Wasser unter Energiefreisetzung umgesetzt wird. Dieser Anteil 300 kWh an Wärmeenergie kann durch 18,9 kg CH₄ bereitgestellt werden (300kWh/15,4kWh/kgCH₄= 19,5 kg CH₄). Durch Oxidation wird der Kohlenstoff in 51,9 kg CO₂ umgewandelt (19,5kg*44/16 = 53,6 kg CO₂). Im Fall A beträgt der CO₂-Footprint von 100kg Synthesegas 186,9 kg CO₂ (133,3kg + 53,6kg = 186,9kg).

### Fall B)

Für Synthesegas mit einem Verhältnis 1:1 sieht die Berechnung wie folgt aus:
93,5 Gew.-% CO und 6,5 Gew.-% H₂. Der CO₂ Footprint Anteil von CO bei 100 kg Synthesegas beträgt dann 146,9 kg CO₂ (93,5kg*44/28 = 146,9 kg) Hinzu kommen 53,6 kg CO₂ für die Energiebereitstellung. Im Fall B beträgt der CO₂-Footprint von 100kg Synthesegas 200,5 kg CO₂ (146,9kg + 53,6kg = 200,5kg). Prozessbedingt entsteht beim Dampfreforming im Fall B ein Überschuss von H₂ in Höhe von 8,7 kg H₂. Diesem sind Emissionen zuordnen, die sich anhand des Energie-Wertes ermitteln lassen: 108,7 kg Synthesegas haben einen Brennwert (Energiegehalt) von 108,7 -7 93,5 kg CO + 15,2kg H₂ →93,5 * 2,8 kWh/kg CO + 15,2kg H₂ * 39,3kWh/kg H₂ = 262 kWh + 597 kWh = 859 kWh. Der Wasserstoffüberschuss von 8,7 kg H₂ hat einen Energiegehalt von 346 kWh. Daraus ergib sich 346kWh/859kWh*200,5kg CO₂ = 81kg CO₂, gewichtet mit 8,7kg H₂-Überschuss ergibt 8,7/15,2*80kg CO₂ = 46,2kg CO₂. Damit beträgt der CO2-Footprint von 100kg Synthesegas (CO:H₂ 1:1) 200,5kg CO₂ - 46,2kg CO₂ = 154,3kg CO₂.

### Beispiel 2

Bei dem erfindungsgemäßen Verfahren wird Synthesegas (CO:H2 1:1) für die Oxosynthese aus der Zufuhr von Methan und Kohlendioxid in einen Plasmareaktor hergestellt. Die zugehörige Anordnung zeigt Figur 1. Das hergestellte Synthesegas kann als Rohstoff für die Herstellung von chemischen Produkten wie z.B. in der Oxo-Synthese verwendet werden.

Der Plasmareaktor (0) gemäß Figur 1 wird von einem Netzteil mit einer elektrischen Leistung von rund 260 kW betrieben. Die Eduktgaszusammensetzung (17) setzt sich aus den einzelnen Edukt-Teilströmen (12), (13) und (14) zusammen. Die Eduktgaszusammensetzung (17) wird mittels Massendurchflussreglern (MFC) vorgegeben ((MFC-CO₂ (12), MFC-CH₄ (13), MFC-H₂ (14); Spalte "Edukte in g/h" in Tabelle 2) und mittels GC-Analyse überwacht. Die Einzelströme werden im Mischer (16) zusammengeführt und, gemischt und die so gebildete Eduktgaszusammensetzung (17) wird über ein Schwebekörpermesser geleitet, um den Gesamt-Volumenfluss zu bestimmen. Dieser kann in dem Fachmann bekannter Weise z.B. über Summation der molaren Anteile ermittelt werden. Der Gaschromatograph (GC) wird hierbei mit Gasmischungen in Mol-% bei Normalbedingungen kalibriert (bspw. Zweipunktkalibration). Auch für die Temperaturmessungen erfolgte eine Zweipunkkalibration. Für Prozesstemperaturen unter 1000°C wurden dem Fachmann bekannte Pt1000 oder Thermoelementfühler verwendet. Für Temperaturen über 1000°C wurden Spezial-Thermoelementfühler für extreme Temperaturen (bis 2315°C) verwendet. Das eigentliche Thermoelement kann dabei entweder aus Platin/Rhodium (Typen R,S,B) oder Wolfram/Rhenium (Typen C,G,D) bestehen, bei Isolierung und Mantel stehen verschiedene Materialien entsprechend dem Anwendungsbereich zur Verfügung. Je nach Mantelmaterial, können die Thermoelementfühler in chemisch inaktiven, oxidierenden oder reduzierenden Umgebungen oder im Vakuum eingesetzt werden. Dabei richtet sich die maximale Temperatur nach dem Material mit dem niedrigsten Temperaturgrenzwert. In Ergänzung kann die Temperatur auch über am Markt verfügbare IR-Sensoren bestimmt werden.

**Tabelle 2: Molare Anteile (Spalte "Mol-%") für die Eduktgaszusammensetzung (17) bei Raumtemperatur und Normaldruck (25°C, 1 bar absolut)**

| | Edukte (Nm³/h) berechnet | Edukte (g/h) aus MFCs | Mol-% GC-Analyse |
|---|---|---|---|
| Volumen-/Massenfluss im Reaktor | 216,20 | 100744 | 100 |
| Volumen-/Massenfluss CO₂ | 32,40 | 63928 | 15 |
| Volumen-/Massenfluss CH4 | 32,40 | 23247 | 15 |
| Volumen-/Massenfluss H₂ | 151,20 | 13561 | 70 |
| Balance | 0,10 | 9 | Spuren |
| Volumen-/Massenfluss CO | 0,00 | 0 | Spuren |

Im vorliegenden Beispiel wurde im Plasmareaktor (0) zwischen den Elektroden eine Gasentladung mit einer Leistungsdichte von rund 0,7 kW/cm³ betrieben. Die kalte Eduktgaszusammensetzung (17) wurde im Wärmetauscher (20) auf ca. 500°C vorgewärmt. Der vorgewärmte Eduktgasstrom (10) mündete in den Plasmareaktor (0) in welchem die chemische Umsetzung zu den Produkten erfolgte. Der Produktstrom (11) hatte am Ausgang des Plasmareaktors (0) eine Gastemperatur von ca. 1500°C. Der Produktstrom (11) wurde dann auf die Heissgasseite des Wärmetauschers (20) geführt und verließ diesen als abgekühlte Produktgaszusammensetzung (18). Die Gastemperatur der Produktgaszusammensetzung (18) betrug am Ausgang des Wärmetauschers (20) etwa 700°C. Mittels Coriolis-Massenflussmesser erfolgte nach weiterer Abkühlung der Produktgaszusammensetzung (18) auf ca. 25°C die Bestimmung des Massenflusses. Dazu korrespondierend wurde der Volumenfluss mittels Schwebekörpermesser bestimmt. Die Zusammensetzung der Produktgaszusammensetzung (18) wurde mittels GC-Analyse der Prozessgase ermittelt (s. Tabelle 3). Dazu wurde das GC mit Gasmischungen in Mol-% bei Normalbedingungen kalibriert. Zur Bestimmung des Volumenfluss des Kohlenmonoxids wird der Gesamt-Volumenfluss mit dem Molanteil aus der GC-Analyse gewichtet. Der so ermittelte Volumenstrom kann dann mit der Mol-Masse in ein dazu korrespondierenden Massenfluss umgerechnet werden.

**Tabelle 3: Zusammensetzung des Produktgasstroms bei Raumtemperatur und Normaldruck (25°C, 1 bar absolut)**

| | Produkte (Nm³/h) Gesamt-Volumenfluss gemessen, Einzelströme berechnet | Produkte (g/h) Gesamt-Massenfluss. gemessen, Einzelströme berechnet | Mol-% Aus GC-Analyse |
|---|---|---|---|
| Volumen-/Massenfluss nach Reaktor bei 25°C, 1 bar abs. | 250 | 100744 | 100 |
| Volumen-/Massenfluss CO₂ | 16,4 | 32359 | ~7 |
| Volumen-/Massenfluss CH₄ | 16,0 | 11480 | ~7 |
| Volumen-/Massenfluss H₂ | 184,0 | 16502 | -74 |
| Balance | 0,10 | 9 | Spuren |
| Volumen-/Massenfluss CO | 32 | 40682 | ~13 |

Durch Differenzbildung der Tabelle 2 (Edukttgaszusammensetzung) und der Tabelle 3 (Produktgaszusammensetzung) erhält man die Massendifferenzen in den einzelnen Stoffkategorien (CO₂, CH₄, CO, H₂). Der Stoffumsatz ergibt sich entsprechend durch Quotientenbildung in den Einzelkategorien.

**Tabelle 4: Massendifferenz und Stoffumsatz**

| | Edukte (g/h) | Produkte (g/h) | Massendifferenz (g/h) | Stoffumsatz CX (Gew-%) bei 260 kW |
|---|---|---|---|---|
| Volumenfluss im Reaktor @NB | 100735 | 100744 | -9 | -.- |
| Volumenfluss CO₂ | 63928 | 32359 | 31569 | 50,6 |
| Volumenfluss CH₄ | 23247 | 11480 | 11767 | 49,3 |
| Volumenfluss H₂ | 13561 | 16502 | -2941 | -.- |
| Volumenfluss H₂O | 0 | 9 | -9 | -.- |
| Volumenfluss CO | 0 | 40682 | -40682 | -.- |

Der beim erfinderischen Beispiel verwendete elektrische Strom für die Gasentladung hat einen spezifischen CO₂-Footprint zwischen 0,025kg CO₂/kWh und 0,0073kg CO₂/kWh. Für Strom aus Norwegen werden amtlich ca. 0,025kg CO₂/kWh ausgewiesen; für. Offshore-Windstrom in Deutschland werden 0,0073kg CO₂/kWh als spezifischen CO₂-Footprint genannt.

Aus den zuvor aufgeführten Tabellenwerten ergibt sich bei 260 kW elektrischer Energieeinspeisung über eine Stunde ein Stromverbrauch von 260 kWh. Dabei werden dann 31,569 kg/h CO₂ und 11,767 kg/h CH₄ zu 40,682 kg/h CO sowie 2,941 kg H₂, also insgesamt 43,336 kg/h Synthesegas umgesetzt, woraus man als spezifischen Wert an Strom 6 kWh je kg Synthesegas erhält (Berechnet: 260 kW/43,336kg/h = 6 kWh je kg Synthesegas).

Bei dem erfindungsgemäßen Verfahren werden spezifisch je 100 kg Synthesegas durch den bei der Plasmaerzeugung benötigen Offshore-Windstrom etwa 4,4 kg CO₂/100 kg Synthesegas emittiert (Berechnung: 6 kWh/kg Synthesegas*100kgSyngas*0,0073kg CO₂/kWh= 4,4 kg CO₂), was im Vergleich mit der Dampfreformierung eine Reduktion von 47,5 kg CO₂/100 kg Synthesegas darstellt (Berechnet: 51,9 kg CO₂/100 kg Synthesegas - 4,4 kg CO₂/100 kg Synthesegas = 47,5 kg CO₂/100 kg Synthesegas).

Dadurch, dass beim erfindungsgemäßen Verfahren CO₂ als Rohstoff eingesetzt wird, wird der CO₂-Fußabdruck um weitere (31,569 * 2,3 =) 72,9 kg CO₂/100 kg Synthesegas verringert. Die gesamte Einsparung beträgt also (47,5kg CO₂ + 72,9 kg CO₂=) 120,4 kg CO₂/100 kg Synthesegas. Das entspricht einer prozentualen Verringerung um rund 78 %.

## Patentansprüche

1. Verfahren zur Herstellung einer Produktgaszusammensetzung, die zumindest Kohlenstoffmonoxid und Wasserstoff umfasst, durch Umsetzen einer Eduktgaszusammensetzung in einem Plasma bei einer Temperatur der Eduktgaszusammensetzung von größer oder gleich 1000 °C, wobei die Eduktgaszusammensetzung
Wasserstoff oder eine Wasserstoffhaltige Gasmischung;
mindestens eine kohlenwasserstoffhaltige Verbindung, ausgewählt aus der Gruppe, bestehend aus Methan, Ethan, Ethen, Propan, Butan, 2-Methylpropan, Pentan, n-Pentan, Isopentan und/oder Neopentan, Methanol, Ethanol und Mischungen von zwei oder mehr davon, und
mindestens ein Oxidationsmittel, ausgewählt aus der Gruppe, bestehend aus Kohlenstoffdioxid und einer Mischung umfassend Kohlenstoffdioxid und Wasser, umfasst.

2. Verfahren nach Anspruch 1, wobei die kohlenwasserstoffhaltige Verbindung Methan, Ethan, Methanol, Ethanol oder eine Mischung von zwei oder mehr der genannten Verbindungen ist.

3. Verfahren nach Anspruch 2, wobei die kohlenwasserstoffhaltige Verbindung Methan, Methanol oder eine Mischung von Methan und Methanol ist.

4. Verfahren nach einem der vorherigen Ansprüche, wobei das Verfahren in einem Strömungsreaktor (0), der einen Gaseinlass (1), einen ersten Gasauslass (6) und einen zweitem Gasauslass (8) umfasst, durchgeführt wird, wobei die Eduktgaszusammensetzung über den Gaseinlass (1) zugeführt, im Strömungsreaktor umgesetzt und die Produktgaszusammensetzung über den zweiten Gasauslass (8) abgeführt wird.

5. Verfahren nach Anspruch 5, wobei der Gaseinlass (1) und der erste Gasauslass (6) an einer Wirbelkammer (2) des Strömungsreaktors (0) angeordnet sind, und wobei der Strömungsreaktor (0) ein Reaktionsrohr (3.1) mit zweitem Gasauslass (8) aufweist und sich vorzugsweise der erste (6) und der zweite Gasauslass (8) des Strömungsreaktors (0) gegenüberliegen.

6. Verfahren nach einem der vorhergehenden Ansprüche, wobei die Zuführung der Eduktgaszusammensetzung zum Strömungsreaktor (0) über einen tangentialen Gaseinlass (1.3) an der Wirbelkammer (2) erfolgt.

7. Verfahren nach einem der vorhergehenden Ansprüche, wobei das Umsetzen der Eduktgaszusammensetzung bei einer Temperatur von größer oder gleich 1300 °C, vorzugsweise größer oder gleich 1500 °C, besonders bevorzugt größer oder gleich 1800 °C erfolgt.

8. Verfahren nach einem der vorhergehenden Ansprüche, wobei der Strömungsreaktor (0) eine Anode (5) und eine Kathode (4) umfasst, wobei die Anode an der Wirbelkammer (2) in Richtung des ersten Gasauslasses (6) und die Kathode (4) im Reaktionsrohr (3.1) angeordnet ist und sich zwischen der Anode (5) und der Kathode (4) das Plasma (C) ausgebildet.

9. Verfahren nach einem der vorhergehenden Ansprüche, wobei die Produktgaszusammensetzung Kohlenstoffmonoxid und Wasserstoff im Molverhältnis (CO : H₂) von 1 : 5 bis 0,5 : 1, vorzugsweise von 1 : 2 bis 1 : 4, besonders bevorzugt von 0,75 bis 1,25 : 1 enthält.

10. Verfahren nach einem der vorhergehenden Ansprüche, wobei das Verfahren kontinuierlich betrieben wird.

11. Verfahren nach einem der vorhergehenden Ansprüche, wobei die Eduktgaszusammensetzung 60 bis 80 Vol.-% Wasserstoff;
10 bis 20 Vol.-% mindestens eine kohlenwasserstoffhaltige Verbindung; und
10 bis 20 Vol.-% mindestens ein Oxidationsmittel enthält,
wobei die Gesamtzusammensetzung der Eduktgaszusammensetzung 100 Vol.-% beträgt.

12. Vorrichtung zur Herstellung einer Produktgaszusammensetzung, die zumindest Kohlenstoffmonoxid und Wasserstoff umfasst, wobei die Vorrichtung einen Strömungsreaktor (0) mit einem ersten Gaseinlass (1), einen ersten Gasauslass (6), einen zweiten Gasauslass (8), mindestens einer Anode (5) und mindestens einer Kathode (4) zur Erzeugung eines Plasmas (C) und mindestens einen Wärmetauscher (20) umfasst.

13. Vorrichtung nach Anspruch 12, wobei der der Strömungsreaktor (0)
eine Wirbelkammer (2) mit tangentialem Gaseinlass (1.3), dem erstem Gasauslass (6) und die mindestens eine Anode (5) und
ein an der Wirbelkammer angeordnetes Reaktionsrohr (3.1), vorzugsweise ein in Gravitationsrichtung oder vertikal zum Untergrund ausgerichtetes Reaktionsrohr (3.1), mit zweitem Gasauslass (8) und mindestens einer Kathode (4) umfasst,
wobei
die mindestens eine Anode (5) axial in der Wirbelkammer (2) oder axial im ersten Gasauslass (6) der Wirbelkammer und die mindestens eine Kathode (4) im Reaktionsrohr (3.1) angeordnet ist, und
die Eduktgaszusammensetzung vor dem Zuführen zur Wirbelkammer (2) den Wärmetauscher (20) durchläuft und am zweiten Gasauslass (8) eine Ableitung (11) angeordnet ist, über die die Produktgaszusammensetzung durch den Wärmetauscher (20) geführt wird, wobei im Wärmetauscher (20) Energie in Form von Wärmeenergie von der Produktgaszusammensetzung auf die Eduktgaszusammensetzung übertragen wird.

14. Vorrichtung nach Anspruch 12 oder 13, wobei das Reaktionsrohr (3.1) eine Kühlung (9) aufweist, die vorzugsweise als Mantelkühlung ausgestaltet ist.

15. Vorrichtung nach einem der Ansprüche 12 bis 14, wobei die Vorrichtung mindestens die folgenden drei Module M1, M2 und M3 umfasst, wobei
das erste Modul (M1) eine Mischvorrichtung (16) zur Herstellung der Eduktgaszusammensetzung umfasst, wobei die kohlenwasserstoffhaltige Verbindung über eine KW-Leitung (12), das Kohlendioxid über eine Kohlendioxidleitung (13), der Wasserstoff über eine Wasserstoffleitung (14) und optional oder zusätzlich Ammoniak und Wasser oder Wasserdampf über eine Wasserleitung (15) zur Mischvorrichtung (16) geführt und dort vermischt werden und aus der Mischvorrichtung (16) über die Eduktgasleitung (17) die Eduktgaszusammensetzung entnommen wird, wobei das erste Modul (M1) mindestens einen ersten Prozessor, mit dem die Zusammensetzung oder der Volumenstrom der Eduktgaszusammensetzung eingestellt wird, um ein mindestens eine erste Computerschnittstelle, über die das erste Modul (M1) in eine Prozessorchestrierungsebene (POL) eingebunden wird, wobei der mindestens eine erste Prozessor über die mindestens eine Computerschnittstelle angesteuert werden kann, umfasst;
das zweite Modul (M2) den Wärmetauscher (20) umfasst, wobei die Eduktgaszusammensetzung über die Eduktgasleitung (17) zum Wärmetauscher (20) geführt wird und den Wärmetauscher (20) über eine Zuleitung (10) verlässt und wobei die Produktgaszusammensetzung aus dem Strömungsreaktor (0) über die Ableitung (11) zum Wärmetauscher geführt wird und im Wärmetauscher (20) Energie in Form von Wärmeenergie von der Produktgaszusammensetzung auf die Eduktgaszusammensetzung übertragen wird wobei das zweite Modul (M2) mindestens einen zweiten Prozessor, mit dem der Volumenstrom und/oder die Temperatur der Eduktgaszusammensetzung in der Zuleitung (10) und/oder der Volumenstrom und/oder die Temperatur der Produktgaszusammensetzung in der Ableitung (11) geregelt wird, und mindestens eine zweite Computerschnittstelle, über die das zweite Modul (M2) in eine Prozessorchestrierungsebene (POL) eingebunden wird, wobei der mindestens eine erste Prozessor über die mindestens eine zweite Computerschnittstelle angesteuert werden kann, umfasst;
das dritte Modul (M3) den Strömungsreaktor (0) umfasst, wobei die Eduktgaszusammensetzung aus dem Wärmetauscher (20) über die Zuleitung (10) zugeführt wird, im Strömungsreaktor in einem Plasma bei einer Gastemperatur von größer oder gleich 1000 °C umgesetzt und eine Produktgaszusammensetzung den Strömungsreaktor (0) über die Ableitung (11) verlässt, wobei das dritte Modul mindestens einen dritten Prozessor, mit dem die Energiedichte des Plasmas (C) und/oder die Verweilzeit im Reaktionsrohr (3.1) und optional die Kühlung (9) im Strömungsreaktor (0) in Abhängigkeit vom Volumenstrom der Eduktgaszusammensetzung in der Zuleitung (10), von der Temperatur der Eduktgaszusammensetzung in der Zuleitung (10) und/oder der molaren Zusammensetzung der Eduktgaszusammensetzung in der Zuleitung (10), geregelt wird, und mindestens eine Computerschnittstelle, über die das dritte Modul (M3) in eine Prozessorchestrierungsebene (POL) eingebunden wird, wobei der mindestens eine erste Prozessor über die mindestens eine zweite Computerschnittstelle angesteuert werden kann, umfasst; und wobei
die Vorrichtung eine Prozessorchestrierungsebene (POL) umfasst, die der Integration und funktionalen Ansteuerung des mindestens einen ersten Moduls (M1), des mindestens einen zweiten Moduls (M2) und/oder des mindestens einen dritten Moduls (M3) dient.
